# EUROPÄISCHE PATENTANMELDUNG

(11) **EP 2 562 037 A2**
(43) Veröffentlichungstag der Anmeldung: **27.02.2013**
(21) Anmeldenummer: 12173384.4
(22) Anmeldetag: 25.06.2012
(51) Int. Cl.: B60Q 1/08

(54) **Verfahren zur Steuerung einer Lichtaussendung eines Scheinwerfers eines Fahrzeugs**

(30) Priorität: 23.08.2011 DE 102011081380
(71) Anmelder: ROBERT BOSCH GMBH, 70442 Stuttgart (DE)
(72) Erfinder: Foltin, Johannes, 71254 Ditzingen (DE)

(57) **Zusammenfassung**

Es wird ein Verfahren (200) zur Steuerung einer Lichtaussendung zumindest eines Scheinwerfers eines Fahrzeugs vorgeschlagen, wobei das Fahrzeug eine Verkehrszeichenerkennungseinrichtung aufweist. Das Verfahren (200) weist einen Schritt des Empfangens (210) zumindest eines Verkehrszeichenerkennungssignals von einer Schnittstelle zu der Verkehrszeichenerkennungseinrichtung auf. Dabei repräsentiert das zumindest eine Verkehrszeichenerkennungssignal ein in einem aktuell von dem Fahrzeug befahrenen Straßenverlauf erkanntes Verkehrszeichen. Das Verfahren (200) weist auch einen Schritt des Einstellens (220) einer Entprellzeit und/oder Entprellstrecke für eine Veränderung der Lichtaussendung des zumindest einen Scheinwerfers zwischen einer ersten Abstrahlcharakteristik und einer zweiten Abstrahlcharakteristik in Abhängigkeit von dem zumindest einen Verkehrszeichenerkennungssignal auf. Das Verfahren (200) weist schließlich einen Schritt des Verzögerns (230) der Veränderung der Lichtaussendung des zumindest einen Scheinwerfers um die eingestellte Entprellzeit und/oder Entprellstrecke auf, um die Lichtaussendung des zumindest einen Scheinwerfers zu steuern.

## Beschreibung

### Stand der Technik

Die vorliegende Erfindung bezieht sich auf ein Verfahren zur Steuerung einer Lichtaussendung eines Scheinwerfers eines Fahrzeugs, auf eine Vorrichtung, die ausgebildet ist, um die Schritte eines solchen Verfahrens durchzuführen, sowie auf ein Computerprogrammprodukt mit Programmcode, der auf einem maschinenlesbaren Träger gespeichert ist, zur Durchführung eines solchen Verfahrens, wenn das Programm auf einer Vorrichtung ausgeführt wird.

Bei einer Lichtsteuerung in einem Fahrzeug mittels eines bekannten Fernlichtassistenten werden Entprellzeiten bzw. Entprell-Strecken eingesetzt, um beispielsweise ein Aufblenden zu verzögern. Hierbei ist allgemein bei einem Fernlichtassistenten eine gewisse Entprellzeit bzw. Entprellstrecke vorgesehen, damit ein Fahrzeug, das z. B. hinter einer Kurve verschwindet, beim Wiederauftauchen nicht geblendet wird. Die Entprellung wird im Allgemeinen bei allen Fernlichtassistenten benötigt.

Die DE 10 2008 053 945 A1 beschreibt eine Scheinwerferanordnung für ein Fahrzeug, bei der Leuchtachsen der Scheinwerfer seitlich geschwenkt werden können, um eine gemeinsame Abstrahlcharakteristik der Scheinwerfer zu verändern.

### Offenbarung der Erfindung

Vor diesem Hintergrund werden mit der vorliegenden Erfindung ein Verfahren zur Steuerung einer Lichtaussendung eines Scheinwerfers eines Fahrzeugs, eine Vorrichtung, die ausgebildet ist, um die Schritte eines solchen Verfahrens durchzuführen, sowie ein Computerprogrammprodukt mit Programmcode, der auf einem maschinenlesbaren Träger gespeichert ist, zur Durchführung eines solchen Verfahrens, wenn das Programm auf einer Vorrichtung ausgeführt wird, gemäß den unabhängigen und nebengeordneten Patentansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zur Steuerung einer Lichtaussendung zumindest eines Scheinwerfers eines Fahrzeugs, wobei das Fahrzeug eine Verkehrszeichenerkennungseinrichtung aufweist, wobei das Verfahren folgende Schritte aufweist:
Empfangen zumindest eines Verkehrszeichenerkennungssignals von einer Schnittstelle zu der Verkehrszeichenerkennungseinrichtung, wobei das zumindest eine Verkehrszeichenerkennungssignal ein in einem aktuell von dem Fahrzeug befahrenen Straßenverlauf erkanntes Verkehrszeichen repräsentiert;
Einstellen einer Entprellzeit und/oder Entprellstrecke für eine Veränderung der Lichtaussendung des zumindest einen Scheinwerfers zwischen einer ersten Abstrahlcharakteristik und einer zweiten Abstrahlcharakteristik in Abhängigkeit von dem zumindest einen Verkehrszeichenerkennungssignal; und
Verzögern der Veränderung der Lichtaussendung des zumindest einen Scheinwerfers um die eingestellte Entprellzeit und/oder Entprellstrecke, um die Lichtaussendung des zumindest einen Scheinwerfers zu steuern.

Bei dem Fahrzeug kann es sich um ein Kraftfahrzeug handeln, insbesondere ein straßengebundenes Kraftfahrzeug, beispielsweise einen Personenkraftwagen, Lastkraftwagen, in Fahrzeug zum Personentransport oder ein sonstiges Nutzfahrzeug. Bei dem zumindest einen Scheinwerfer kann es sich beispielsweise um einen Frontscheinwerfer des Fahrzeugs handeln. Die Lichtaussendung des Scheinwerfers kann hierbei in Stufen oder stufenlos veränderbar sein. Die Lichtaussendung des Scheinwerfers kann dabei hinsichtlich der Abstrahlcharakteristik des Scheinwerfers verändert werden. Die Abstrahlcharakteristik kann eine Helligkeit, einen Leuchtwinkel und/oder dergleichen aufweisen. Beispielsweise kann die erste Abstrahlcharakteristik einer geringeren Beleuchtungsintensität oder Leuchtweite des Scheinwerfers als die zweite Abstrahlcharakteristik entsprechen. Die Lichtaussendung des Scheinwerfers kann hierbei von der ersten Abstrahlcharakteristik zu der zweiten Abstrahlcharakteristik oder von der zweiten Abstrahlcharakteristik zu der ersten Abstrahlcharakteristik verändert werden. Beispielsweise kann die erste Abstrahlcharakteristik einem Abblendlicht oder dergleichen entsprechen oder ähnlich sein und kann die zweite Abstrahlcharakteristik einem Fernlicht oder dergleichen entsprechen oder ähnlich sein. Die Verkehrszeichenerkennungseinrichtung kann eine in Vorwärtsfahrtrichtung des Fahrzeugs gerichtete Kamera, eine Bildverarbeitungseinrichtung und/oder dergleichen aufweisen. Die Verkehrszeichenerkennungseinrichtung erzeugt das Verkehrszeichenerkennungssignal. Das Verkehrszeichenerkennungssignal gibt an, welches Verkehrszeichen in dem aktuell von dem Fahrzeug befahrenen Straßenverlauf von der Verkehrszeichenerkennungseinrichtung erkannt wurde. Dabei kann das Verkehrszeichenerkennungssignal beispielsweise einen Typ des Verkehrszeichens und das genaue Verkehrszeichen, um das es sich handelt, repräsentieren. Verkehrszeichenerkennungssignal das Verkehrszeichen eindeutig repräsentieren. Bei dem Verkehrszeichen kann es sich um ein Verkehrsschild, eine Lichtzeichenanlage und/oder eine Fahrbahnmarkierung, aber auch um Straßenbeleuchtung oder Leitpfosten handeln. Die Verkehrsschilder können Verbotsschilder, die Gebotsschilder, Warnschilder, Richtungsschilder, Ortsschilder und dergleichen umfassen. Dabei können ein Umriss, Symbole und/oder Schriftzeichen des Verkehrszeichens erkannt werden und in dem Verkehrszeichenerkennungssignal repräsentiert sein. Die Entprellzeit stellt eine Form von Hysterese dar. Die Entprellzeit kann hierbei zum Beispiel als eine Verzögerungszeit bei der Veränderung der Lichtaussendung des Scheinwerfers zwischen der ersten Abstrahlcharakteristik und der zweiten Abstrahlcharakteristik verstanden werden. Die Entprellzeit kann dabei im Schritt des Einstellens bezüglich eines zuvor eingestellten Wertes oder eines Vorgabewertes verkürzt oder verlängert werden. Unter einer Entprellstrecke kann eine geschwindigkeitsabhängige Entprellzeit verstanden werden. Beispielsweise kann bei Stillstand des Fahrzeugs die Entprellzeit beliebig lang werden. Unter einer Entprellstrecke ist somit insbesondere eine Warte-Strecke zu verstehen, die gefahren werden sollte, bis eine Umschaltung des Scheinwerfers in eine andere Abstrahlcharakteristik erfolgt, somit ist die Entprellstrecke also vergleichbar mit einer Entprellzeit, jedoch unter Berücksichtigung der aktuellen Bewegung des Fahrzeugs.

Die vorliegende Erfindung schafft ferner eine Vorrichtung, die ausgebildet ist, um die Schritte des erfindungsgemäßen Verfahrens durchzuführen bzw. umzusetzen. Insbesondere kann die Vorrichtung Einrichtungen aufweisen, die ausgebildet sind, um je einen Schritt des Verfahrens auszuführen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät bzw. Steuergerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einer Vorrichtung ausgeführt wird.

Die Erfindung basiert auf der Erkenntnis, dass bei der Steuerung einer Lichtaussendung zumindest eines Scheinwerfers eines Fahrzeugs die Veränderung der Lichtaussendung des zumindest einen Scheinwerfers zwischen einer ersten Abstrahlcharakteristik und einer zweiten Abstrahlcharakteristik verbessert werden kann, indem eine auf die Veränderung anzuwendende Entprellzeit und/oder Entprellstrecke anhand von Verkehrszeichen eingestellt wird. Somit wird eine Verkehrszeichenerkennung zum Einstellen der Entprellzeit und/oder der Entprellstrecke des zumindest einen Scheinwerfers genutzt. Die Lichtaussendung des zumindest einen Scheinwerfers kann dann basierend auf der eingestellten Entprellzeit und/oder Entprellstrecke vorteilhaft gesteuert werden.

Ein Vorteil der vorliegenden Erfindung liegt darin, dass sich aus einem erkanntem Verkehrszeichen die Straßensituation bzw. der Straßenverlauf zuverlässig und treffsicher herleiten lässt, da Straßenbauvorgaben zu einer einheitlichen Beschilderung führen. Die Entprellzeit und/oder Entprellstrecke dient hierbei zum Beispiel als eine Wartezeit oder Wartestrecke vor dem Aufblenden und somit als präventive Blendungsvermeidung gegenüber anderen Fahrzeugen. Zudem kann auch eine zu häufige Veränderung der Lichtaussendung, z.□B. ein zu häufiges Auf- und Abblenden, vermieden werden. Somit sinkt auch für den Fahrer des Fahrzeugs ein störender Einfluss einer häufigen Veränderung der Lichtaussendung und es steigt daher die Fahrsicherheit. Bei der Entprellzeit und/oder Entprellstrecke kann hierbei unter Einbeziehung der Verkehrszeichenerkennung ein vorteilhafter Kompromiss zwischen Sichtweite und prophylaktischer Blendungsvermeidung erreicht werden.

Auch kann ein Schritt des Auswertens des zumindest einen Verkehrszeichenerkennungssignals vorgesehen sein, um zumindest eine Eigenschaft des aktuell von dem Fahrzeug befahrenen Straßenverlaufs zu bestimmen. Die zumindest eine Eigenschaft kann beispielsweise eine Neigung bzw. Steigung des Straßenverlaufs, ein Auftreten zumindest einer Kurve und dergleichen aufweisen. Bei dem Schritt des Auswertens kann das zumindest eine Verkehrszeichenerkennungssignal analysiert werden, interpretiert werden oder dergleichen. Beispielsweise können in einer Nachschlagtabelle Signalverläufe und Eigenschaften gespeichert sein. Ein Signalverlauf des zumindest einen Verkehrszeichenerkennungssignals kann dann mit den Referenzsignalverläufen abgeglichen werden, um die korrekte Eigenschaft zu identifizieren. Diese Ausführungsform bietet den Vorteil, dass Eigenschaften des Straßenverlaufs, die einen großen Einfluss auf die Steuerung der Lichtaussendung und daher eine große Aussagekraft sowie Relevanz aufweisen, genutzt werden können.

Hierbei kann die zumindest eine Eigenschaft des aktuell von dem Fahrzeug befahrenen Straßenverlaufs eine straßenverlaufsbedingte Sichtweite und/oder eine Entwurfsgeschwindigkeit des aktuell von dem Fahrzeug befahrenen Straßenverlaufs aufweisen. Der Entwurf von Straßen erfolgt nach der Richtlinien für die Anlage von Straßennach der so genannten Entwurfsgeschwindigkeit. Durch die Entwurfsgeschwindigkeit werden eine ganze Reihe von Parametern der Entwurfsplanung von Straßen beeinflusst. Dazu zählen beispielsweise Kurvenmindestradius, Klothoidenparameter, Höchstlänge von Geraden, Höchstlängsneigung, Kuppen- und Wannenmindesthalbmesser und Querneigung. Alle diese Parameter sind für die Einsehbarkeit bzw. Sichtweite in dem aktuellen Straßenverlauf von Bedeutung. Wenn demnach die Entwurfsgeschwindigkeit des aktuellen Straßenverlaufs bekannt ist, kann auf die Einsehbarkeit bzw. Sichtweite vor dem Fahrzeug geschlossen werden. Diese Ausführungsform bietet den Vorteil, dass die Steuerung der Lichtaussendung auf einer aussagekräftigen, zuverlässigen und vorausschauenden Basis erfolgt.

Zudem kann ein Schritt des Zuweisens eines Einstellwertes dem zumindest einen Verkehrszeichenerkennungssignal basierend auf der zumindest einen Eigenschaft des aktuell von dem Fahrzeug befahrenen Straßenverlaufs vorgesehen sein. Dabei kann im Schritt des Einstellens die Entprellzeit und/oder Entprellstrecke in Abhängigkeit von dem zumindest einen Verkehrszeichenerkennungssignal und anhand des dem zumindest einen Verkehrszeichenerkennungssignal zugewiesenen Einstellwertes einstellbar sein. Der Einstellwert kann abhängig von der im Schritt des Auswertens bestimmten Eigenschaft des Stra-βenverlaufs eine Verkürzung, eine Verlängerung oder ein Beibehalten der Entprellzeit im Schritt des Einstellens bewirken. Je nach Landschaft kann die Sichtweite unterschiedlich sein. In einer Ebene ohne Baumbewuchs mit einer geraden Straße beispielsweise werden Fahrzeuge schon von weitem erkannt. Hier kann prinzipiell eine kurze Entprellzeit und/oder Entprellstrecke gewählt bzw. eingestellt werden. Auf einer kurvigen hügeligen Strecke mit Baumbewuchs oder anderen Möglichkeiten zur Verdeckung zum Beispiel kann eine längere Entprellzeit und/oder Entprellstrecke gewählt bzw. eingestellt werden, da andere Fahrzeuge unvermittelt in der Nähe des Fahrzeugs auftauchen können. Diese Ausführungsform bietet den Vorteil, dass mittels des Einstellwertes die relevanten und aussagekräftigen Eigenschaften des Straßenverlaufs bei dem Einstellen der Entprellzeit und/oder Entprellstrecke auf einfache Weise mit berücksichtigt werden können.

Es kann im Schritt des Empfangens zumindest ein weiteres Verkehrszeichenerkennungssignal von einer Schnittstelle zu der Verkehrszeichenerkennungseinrichtung empfangen werden, wobei das zumindest eine weitere Verkehrszeichenerkennungssignal zumindest ein weiteres in einem aktuell von dem Fahrzeug befahrenen Straßenverlauf erkanntes Verkehrszeichen repräsentiert. Auch kann im Schritt des Einstellens die Entprellzeit und/oder Entprellstrecke in Abhängigkeit von dem Verkehrszeichenerkennungssignal und dem zumindest einen weiteren Verkehrszeichenerkennungssignal eingestellt werden. Wenn das Fahrzeug einen Straßenverlauf befährt, können nacheinander mehrere Verkehrszeichen erkannt werden und somit mehrere Verkehrszeichenerkennungssignale empfangen werden. Diese Ausführungsform bietet den Vorteil, dass auch mehrere Verkehrszeichen über das Verkehrszeichenerkennungssignal und das zumindest eine weitere Verkehrszeichenerkennungssignal im Schritt des Einstellens die Entprellzeit und/oder Entprellstrecke beeinflussen können. Somit kann die Steuerung der Lichtaussendung der aktuellen Situation in dem Straßenverlauf genauer Rechnung tragen.

Dabei kann ein Schritt des Kombinierens des Verkehrszeichenerkennungssignals und des zumindest einen weiteren Verkehrszeichenerkennungssignals vorgesehen sein, um ein kombiniertes Verkehrszeichenerkennungssignal zu erzeugen. Dabei kann im Schritt des Einstellens die Entprellzeit und/oder die Entprellstrecke in Abhängigkeit von dem kombinierten Verkehrszeichenerkennungssignal eingestellt werden. Im Schritt des Kombinierens kann eine logische Verknüpfung der Signale erfolgen. Auch kann der Schritt des Kombinierens in Verbindung mit dem Schritt des Auswertens erfolgen. Dabei kann der Schritt des Kombinierens in Abhängigkeit von ausgewerteten Eigenschaften der Verkehrszeichenerkennungssignale durchgeführt werden. Basierend auf den ausgewerteten Eigenschaften der Verkehrszeichenerkennungssignale kann eine geeignete Art der Kombination der Verkehrszeichenerkennungssignale erfolgen. Diese Ausführungsform bietet den Vorteil, dass über das kombinierte Verkehrszeichenerkennungssignal - insbesondere auch kurz nacheinander auftretende - Verkehrszeichen entsprechend den darauf abschließbaren Eigenschaften des Straßenverlaufs gegebenenfalls in unterschiedlichem Ausmaß im Schritt des Einstellens berücksichtigt werden können.

Gemäß einer Ausführungsform kann im Schritt des Einstellens die Entprellzeit und/oder der Entprellstrecke in Abhängigkeit von dem Verkehrszeichenerkennungssignal und in Abhängigkeit von Fahrdaten des Fahrzeugs und/oder einer Umgebungsinformation eingestellt werden. Die Fahrdaten können hierbei eine Geschwindigkeit des Fahrzeugs, eine Gierrate, und/oder dergleichen aufweisen. Die Umgebungsinformation kann eine Anzahl entgegenkommender Fahrzeuge, Daten eines Navigationssystems, eine Spurerkennung und/oder dergleichen aufweisen. Die Entprellzeit und/oder die Entprellstrecke kann fest eingestellt sein, abhängig von einer Eigenbewegung des Fahrzeugs sein, z. B. geschwindigkeitsabhängig, abhängig von der Gierrate, etc., oder anhand von Situationen in der Umgebung des Fahrzeugs eingestellt werden. Ist beispielsweise ein einzelnes Fahrzeug entgegengekommen, so kann die Entprellzeit und/oder Entprellstrecke verkürzt werden und somit beispielsweise schneller aufgeblendet werden. Die Sichtweite bzw. Einsehbarkeit in dem aktuellen Straßenverlauf kann auch über eine Auswertung von, ggf. speziell angereichertem, Kartenmaterial beispielsweise eines Navigationssystems, sofern vorhanden, bestimmt werden, da hier der Straßenverlauf weit sichtbar bzw. abschätzbar ist. Somit kann ein virtueller Sensor geschaffen sein. Diese Ausführungsform bietet den Vorteil, dass die Entprellzeit noch genauer und an die aktuelle Verkehrs- und Straßensituation angepasst eingestellt werden kann. Somit kann ein Verhältnis zwischen Visibilität und Blendungsvermeidung verbessert werden.

Gemäß einer weiteren Ausführungsform kann ein Schritt des Prüfens der eingestellten Entprellzeit auf Plausibilität anhand von Fahrdaten des Fahrzeugs und/oder einer Umgebungsinformation und einen Schritt des Korrigierens der eingestellten Entprellzeit und/oder Entprellstrecke basierend auf den Fahrdaten des Fahrzeugs und/oder der Umgebungsinformation vorgesehen sein, wenn sich im Schritt des Prüfens eine mangelnde Plausibilität der eingestellten Entprellzeit und/oder Entprellstrecke ergibt. Die Fahrdaten des Fahrzeugs und/oder die Umgebungsinformation können zur Plausibilisierung der basierend auf dem Verkehrszeichenerkennungssignal eingestellten Entprellzeit und/oder Entprellstrecke verwendet werden. Wenn beispielsweise die Spurerkennung auf einen geraden Straßenverlauf schließen lässt, kann die Entprellzeit und/oder Entprellstrecke etwas höher eingestellt werden. Ebenso bei durchgezogenen Spurmarkierungen in der Mitte, was auf ein Überholverbot schließen lässt. Eine Länge von Strichen der Spurmarkierung kann ebenfalls als Indiz für eine Entwurfsgeschwindigkeit genutzt werden, da die Strichlänge mit der Geschwindigkeit des Fahrzeugs zunimmt. Diese Ausführungsform bietet den Vorteil, dass Entprellzeit und/oder Entprellstrecke noch genauer, sicherer und situativ zutreffender eingestellt werden kann.

Die Erfindung wird anhand der beigefügten Zeichnungen beispielhaft näher erläutert. Es zeigen:
- Fig. 1: eine schematische Darstellung eines Fahrzeugs mit einer Steuervorrichtung gemäß einem Ausführungsbeispiel der vorliegenden Erfindung;
- Fig. 2: ein Ablaufdiagramm eines Verfahrens gemäß einem Ausführungsbeispiel der vorliegenden Erfindung; und

Figuren 3 bis 8 Darstellungen verschiedener Verkehrszeichen.

Gleiche oder ähnliche Elemente können in den Figuren durch gleiche oder ähnliche Bezugszeichen versehen sein, wobei auf eine wiederholte Beschreibung verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Weiterhin ist die Erfindung in der nachfolgenden Beschreibung eventuell unter Verwendung von unterschiedlichen Maßen und Dimensionen erläutert, wobei die Erfindung nicht auf diese Maße und Dimensionen eingeschränkt zu verstehen ist. Ferner können erfindungsgemäße Verfahrensschritte wiederholt sowie in einer anderen als in der beschriebenen Reihenfolge ausgeführt werden. Umfasst ein Ausführungsbeispiel eine "und/oder"-Verknüpfung zwischen einem ersten Merkmal/Schritt und einem zweiten Merkmal/Schritt, so kann dies so gelesen werden, dass das Ausführungsbeispiel gemäß einer Ausführungsform sowohl das erste Merkmal / den ersten Schritt als auch das zweite Merkmal /den zweiten Schritt und gemäß einer weiteren Ausführungsform entweder nur das erste Merkmal /Schritt oder nur das zweite Merkmal /Schritt aufweist.

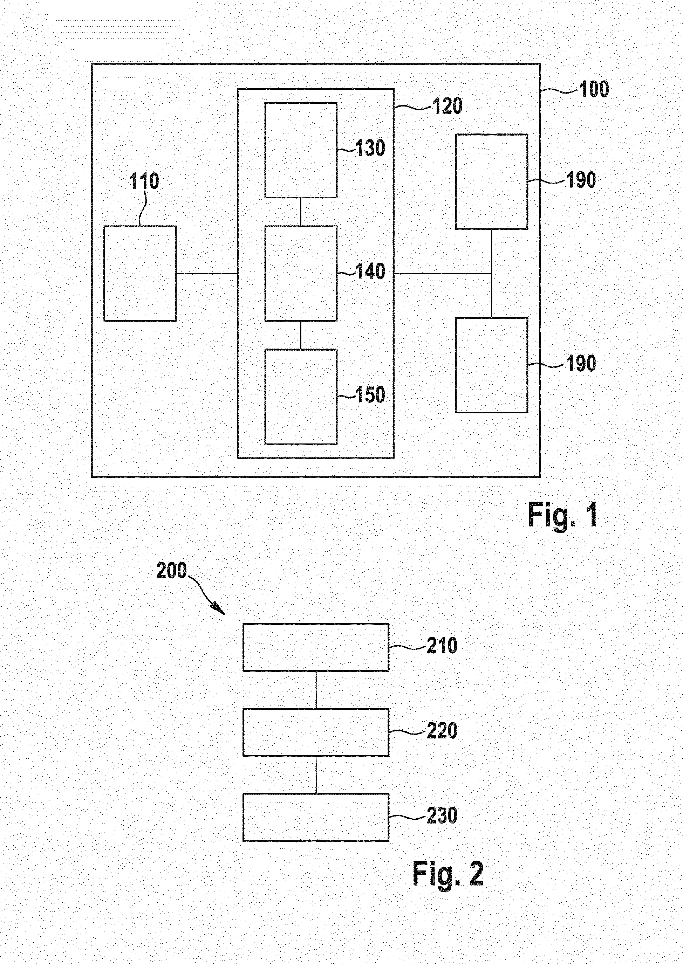

Fig. 1 zeigt eine schematische Darstellung eines Fahrzeugs 100 mit einer Steuervorrichtung gemäß einem Ausführungsbeispiel der vorliegenden Erfindung. Das Fahrzeug 100 weist eine Verkehrszeichenerkennungseinrichtung 110, eine Steuervorrichtung 120, eine Empfangseinrichtung 130, eine Einstelleinrichtung 140, eine Verzögerungseinrichtung 150 und zwei Scheinwerfer 190 auf. Die Verkehrszeichenerkennungseinrichtung 110 ist mit der Steuervorrichtung 120 beispielsweise über zumindest eine Signalleitung verbunden. Die zwei Scheinwerfer 190 sind mit der Steuervorrichtung 120 beispielsweise über zumindest eine Signalleitung verbunden. Die Steuervorrichtung 120 ist zwischen die Verkehrszeichenerkennungseinrichtung 110 und die zwei Scheinwerfer 190 geschaltet. Die Steuervorrichtung 120 weist die Empfangseinrichtung 130, die Einstelleinrichtung 140 und die Verzögerungseinrichtung 150 auf.

Die Verkehrszeichenerkennungseinrichtung 110 kann beispielsweise eine Kamera und/oder Bildverarbeitungselektronik aufweisen. Die Verkehrszeichenerkennungseinrichtung ist ausgebildet, um zumindest ein Verkehrszeichenerkennungssignal, dass ein in einem aktuell von dem Fahrzeug befahrenen Straßenverlauf erkanntes Verkehrszeichen repräsentiert, zu erzeugen und an die Steuervorrichtung 120 auszugeben.

Die Steuervorrichtung 120 ist ausgebildet, um eine Steuerung einer Lichtaussendung der Scheinwerfer 190 des Fahrzeugs 100 durchzuführen. Insbesondere ist die Steuervorrichtung 120 ausgebildet, um eine Steuerung der Lichtaussendung der Scheinwerfer 190 des Fahrzeugs 100 im Hinblick auf eine Entprellzeit und/oder Entprellstrecke durchzuführen. Die Empfangseinrichtung 130, die Einstelleinrichtung 140 und die Verzögerungseinrichtung 150 der Steuervorrichtung 120 sind miteinander verbunden. Genau gesagt ist die Empfangseinrichtung 130 mit der Einstelleinrichtung 140 verbunden und ist die Verzögerungseinrichtung 150 mit der Einstelleinrichtung 140 verbunden. Somit ist die Einstelleinrichtung 140 zwischen die Empfangseinrichtung 130 und die Verzögerungseinrichtung 150 geschaltet.

Die Empfangseinrichtung 130 der Steuervorrichtung 120 ist ausgebildet, um das zumindest eine Verkehrszeichenerkennungssignal von der Verkehrszeichenerkennungseinrichtung 110 zu empfangen. Die Empfangseinrichtung 130 kann das zumindest eine empfangene Verkehrszeichenerkennungssignal an die Einstelleinrichtung 140 ausgeben.

Die Einstelleinrichtung 140 kann das zumindest eine Verkehrszeichenerkennungssignal von der Empfangseinrichtung 130 empfangen. Die Einstelleinrichtung 140 ist ausgebildet, um eine Entprellzeit und/oder Entprellstrecke für eine Veränderung der Lichtaussendung der Scheinwerfer 190 zwischen einer ersten Abstrahlcharakteristik und einer zweiten Abstrahlcharakteristik in Abhängigkeit von dem zumindest einen Verkehrszeichenerkennungssignal einzustellen. Beispielsweise kann es sich bei der Veränderung der Lichtaussendung der Scheinwerfer 190 um einen Aufblendvorgang oder dergleichen handeln. Die Einstelleinrichtung 140 kann die eingestellte Entprellzeit und/oder Entprellstrecke in Gestalt eines Signals an die Verzögerungseinrichtung 150 ausgeben.

Die Verzögerungseinrichtung 150 kann die eingestellte Entprellzeit von der Einstelleinrichtung 140 empfangen. Die Verzögerungseinrichtung 150 ist ausgebildet, um die Veränderung der Lichtaussendung der Scheinwerfer 190 um die eingestellte Entprellzeit zu verzögern und/oder die Entprellstrecke zu verlängern. Dazu kann die Verzögerungseinrichtung 150 einen Verzögerungswert generieren.

Die Steuervorrichtung 120 kann ein Steuersignal an die Scheinwerfer 190 ausgeben. Das Steuersignal kann den Verzögerungswert der Verzögerungseinrichtung 150 beinhalten bzw. berücksichtigen. Die Steuervorrichtung 120 ist ausgebildet, um die Lichtaussendung der Scheinwerfer 190 über das Steuersignal zu steuern.

Die Scheinwerfer 190 können das Steuersignal von der Steuervorrichtung 120 empfangen. Das Steuersignal kann bewirken, dass die Veränderung der Lichtaussendung der Scheinwerfer 190 zwischen der ersten Abstrahlcharakteristik und der zweiten Abstrahlcharakteristik unter Berücksichtigung der eingestellten Entprellzeit, und somit des Verzögerungswertes, und/oder der eingestellte, Entprellstrecke erfolgt.

Fig. 2 zeigt ein Ablaufdiagramm eines Verfahrens 200 zur Steuerung einer Lichtaussendung zumindest eines Scheinwerfers eines Fahrzeugs, gemäß einem Ausführungsbeispiel der vorliegenden Erfindung. Dabei weist das Fahrzeug eine Verkehrszeichenerkennungseinrichtung auf. Das Verfahren 200 weist einen Schritt des Empfangens 210 zumindest eines Verkehrszeichenerkennungssignals von einer Schnittstelle zu der Verkehrszeichenerkennungseinrichtung auf. Dabei repräsentiert das zumindest eine Verkehrszeichenerkennungssignal ein in einem aktuell von dem Fahrzeug befahrenen Straßenverlauf erkanntes Verkehrszeichen. Das Verfahren 200 weist auch einen Schritt des Einstellens 220 einer Entprellzeit und/oder Entprellstrecke für eine Veränderung der Lichtaussendung des zumindest einen Scheinwerfers zwischen einer ersten Abstrahlcharakteristik und einer zweiten Abstrahlcharakteristik in Abhängigkeit von dem zumindest einen Verkehrszeichenerkennungssignal auf. Das Verfahren 200 weist schließlich einen Schritt des Verzögerns 230 der Veränderung der Lichtaussendung des zumindest einen Scheinwerfers um die eingestellte Entprellzeit und/oder Entprellstrecke auf, um die Lichtaussendung des zumindest einen Scheinwerfers zu steuern. Das Verfahren 200 kann in Verbindung mit einer Vorrichtung, wie beispielsweise der Steuervorrichtung aus Fig. 1, vorteilhaft ausgeführt werden. Somit kann die Steuervorrichtung aus Fig. 1 ausgebildet sein, um die Schritte des Verfahrens 200 durchzuführen.

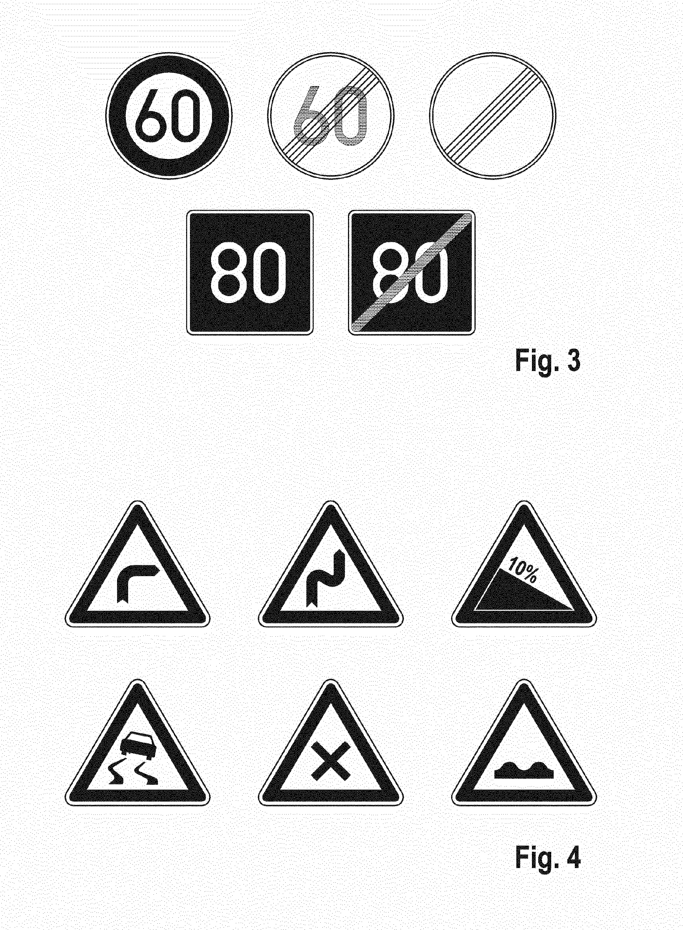

Figuren 3 bis 8 zeigen Darstellungen einer Beschilderung mittels verschiedener Verkehrszeichen, wobei anhand der Verkehrszeichen auf die Entwurfsgeschwindigkeit des aktuell von einem Fahrzeug befahrenen Straßenverlaufs geschlossen werden kann. Die Verkehrszeichen können von einer Verkehrszeichenerkennungseinrichtung, wie beispielsweise der Verkehrszeichenerkennungseinrichtung aus Fig. 1, erkannt und durch eine Vorrichtung, wie beispielsweise die Steuervorrichtung aus Fig. 1, zur Steuerung einer Lichtaussendung zumindest eines Scheinwerfers eines Fahrzeugs genutzt werden. Hierbei kann die Vorrichtung ein Verfahren, wie beispielsweise das Verfahren aus Fig. 2, durchführen. Dabei wird basierend auf der Entwurfsgeschwindigkeit des Straßenverlaufs eine enthält Zeit für den zumindest einen Scheinwerfer eingestellt.

Fig. 3 zeigt geschwindigkeitsregulierende Verkehrszeichen als Hinweis auf die Entwurfsgeschwindigkeit. In Fig. 3 sind Verkehrszeichen für Geschwindigkeitsbegrenzung und/oder Aufhebungen der Geschwindigkeitsbegrenzung und für Richtgeschwindigkeit und deren Aufhebung gezeigt, die ausgewertet werden können, um die Entwurfsgeschwindigkeit des Straßenverlaufs zu bestimmen. Ein Zusatz "Lärmschutz" an einer Geschwindigkeitsbegrenzung kann beispielsweise einen Hinweis darauf liefern, dass die Entwurfsgeschwindigkeit, und damit die Sichtweite, in dem aktuellen Straßenverlauf höher ist als die angegebene Maximalgeschwindigkeit.

Fig. 4 zeigt Warnschilder, bei denen bevorzugt die Entprellzeit verkürzt wird, da die Entwurfsgeschwindigkeit, ebenso wie wahrscheinlich die Sichtweite, in dem aktuellen Straßenverlauf niedrig ist. Dazu können die in Fig. 4 gezeigten Warnschilder ausgewertet werden. Die in Fig. 4 gezeigten Warnschilder weisen dabei auf eine scharfe Kurve, einen kundigen Straßenverlauf, ein Gefälle, Rutschgefahr, eine Kreuzung sowie hügeliges Gelände hin.

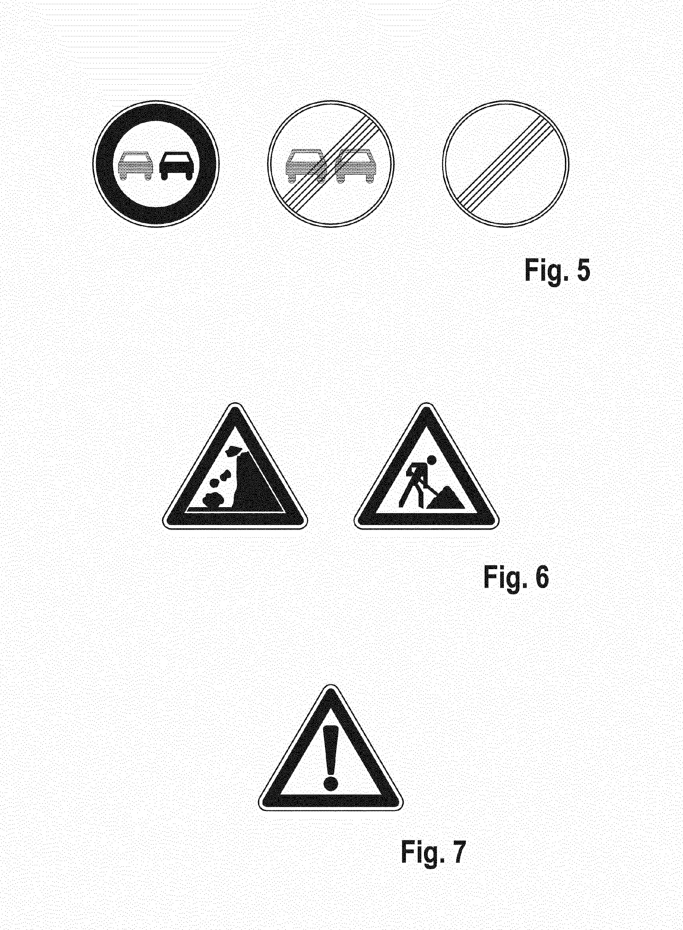

Fig. 5 zeigt Verkehrsschilder für Überholverbot, für Aufhebung von Überholverbot sowie für eine generelle Aufhebung von Verboten und Beschränkungen. An schlecht einsehbaren Stellen des Straßenverlaufs ist häufig ein Überholverbot zu finden, da die Sichtweite für einen Überholvorgang nicht groß genug ist. Ein Aufheben des Überholverbots deutet auf eine größer werdende Sichtweite hin. Auch dies kann für eine entsprechende Einstellung der Entprellzeit und/oder Entprellstrecke genutzt werden.

Fig. 6 zeigt ein Steinschlag-Warnschild für sowie ein Baustellen-Warnschild. Steine fallen nur von hohen Stellen bzw. Felswänden herab. Hohe Bereiche können die Sicht in einer Kurve verringern. In Baustellen sind häufig Umgehungen zu finden, die kurvig sind. Daher können das Steinschlagzeichen und auch das Baustellenzeichen genutzt werden, um auf die Entwurfsgeschwindigkeit bzw. Einsehbarkeit des Straßenverlaufs zu schließen.

Fig. 7 zeigt ein allgemeines Warnschild. Manche Verkehrszeichen können bei der Auswertung hinsichtlich der Entwurfsgeschwindigkeit bzw. Einsehbarkeit des Straßenverlaufs unterschiedlich eingesetzt werden. Ein allgemeines Warnzeichen bzw. Warnschild beispielsweise könnte sowohl zur Vergrößerung der Entprellzeit wegen prophylaktischer Blendungsvermeidung verwendet werden, wenn eine schlecht einsehbare Stelle vermutet wird, als auch zur Verkürzung der Entprellzeit zur Erhöhung der Sichtweite, um die Gefahrenstelle rechtzeitig zu erkennen.

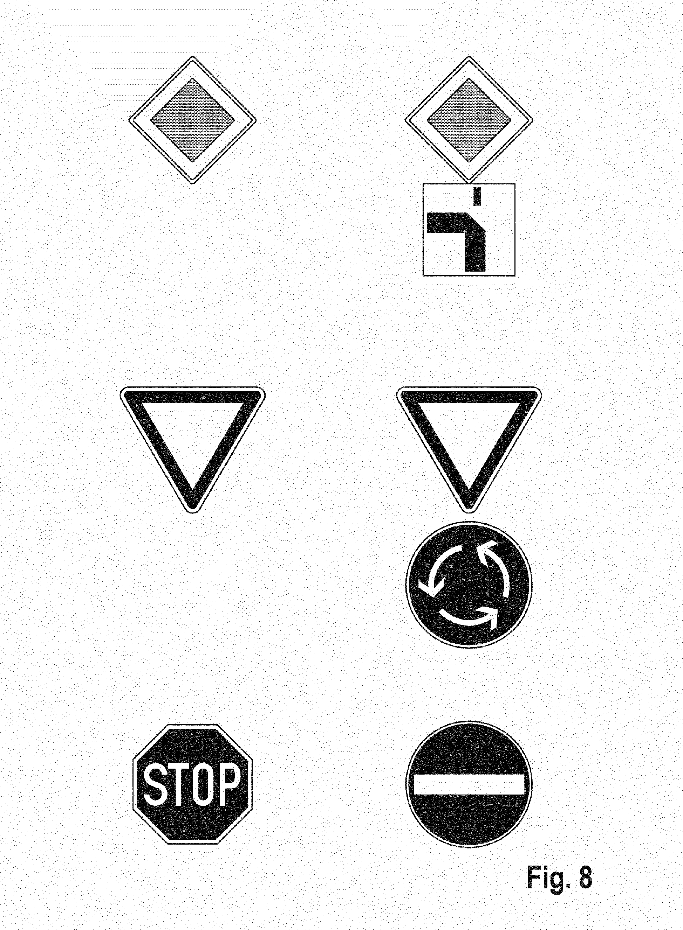

Fig. 8 zeigt Verkehrszeichen, die auf eine Kreuzung, einen Kreisverkehr oder eine Einmündung hinweisen. Auch dies kann Hinweise auf die Entwurfsgeschwindigkeit bzw. Einsehbarkeit des Straßenverlaufs liefern.

Es können noch weitere Schilder zur Schätzung bzw. Bestimmung der Entwurfsgeschwindigkeit genutzt werden. So beispielsweise Ortsschilder, Wegweiser, Richtungstafeln zur Erkennung von scharfen Kurven und dergleichen.

Die Vorrichtung und das Verfahren zur Steuerung einer Lichtaussendung zumindest eines Scheinwerfers eines Fahrzeugs gemäß Ausführungsbeispielen der vorliegenden Erfindung könnten damit in bestehende Fernlichtassistenten integriert und in Verbindung mit denselben genutzt werden. Hierbei werden Entprellzeiten und/oder Entprellstrecken für einen solchen Fernlichtassistenten anhand von Verkehrszeichen und der daraus abgeleiteten Entwurfsgeschwindigkeit und/oder Sichtweite eingestellt. Somit wird die Schildererkennung zum Abschätzen der Sichtbarkeit und Einstellen von Entprellzeiten und/oder Entprellstrecken von Scheinwerfersystemen genutzt. Entweder wird beispielsweise das Fernlicht und/oder Abblendlicht oder dergleichen anhand der Schilder direkt eingestellt oder es wird die Parametrisierung anders eingestellt, so dass Fernlicht und/oder Abblendlicht oder dergleichen auch abhängig von weiteren Einflussgrößen eingestellt wird.

## Patentansprüche

1. Verfahren (200) zur Steuerung einer Lichtaussendung zumindest eines Scheinwerfers (190) eines Fahrzeugs (100), wobei das Fahrzeug (100) eine Verkehrszeichenerkennungseinrichtung (110) aufweist, wobei das Verfahren (200) folgende Schritte aufweist:
Empfangen (210) zumindest eines Verkehrszeichenerkennungssignals von einer Schnittstelle zu der Verkehrszeichenerkennungseinrichtung (110), wobei das zumindest eine Verkehrszeichenerkennungssignal ein in einem aktuell von dem Fahrzeug (100) befahrenen Straßenverlauf erkanntes Verkehrszeichen repräsentiert;
Einstellen (220) einer Entprellzeit und/oder Entprellstrecke für eine Veränderung der Lichtaussendung des zumindest einen Scheinwerfers (190) zwischen einer ersten Abstrahlcharakteristik und einer zweiten Abstrahlcharakteristik in Abhängigkeit von dem zumindest einen Verkehrszeichenerkennungssignal; und
Verzögern (230) der Veränderung der Lichtaussendung des zumindest einen Scheinwerfers (190) um die eingestellte Entprellzeit und/oder Entprellstrecke, um die Lichtaussendung des zumindest einen Scheinwerfers (190) zu steuern.

2. Verfahren (200) gemäß Anspruch 1, **gekennzeichnet durch** einen Schritt des Auswertens des zumindest einen Verkehrszeichenerkennungssignals, um zumindest eine Eigenschaft des aktuell von dem Fahrzeug (100) befahrenen Straßenverlaufs zu bestimmen.

3. Verfahren (200) gemäß Anspruch 2, **dadurch gekennzeichnet, dass** die zumindest eine Eigenschaft des aktuell von dem Fahrzeug (100) befahrenen Straßenverlaufs eine straßenverlaufsbedingte Sichtweite und/oder eine Entwurfsgeschwindigkeit des aktuell von dem Fahrzeug (100) befahrenen Stra-βenverlaufs aufweist.

4. Verfahren (200) gemäß einem der Ansprüche 2 bis 3, **gekennzeichnet durch** einen Schritt des Zuweisens eines Einstellwertes dem zumindest einen Verkehrszeichenerkennungssignal basierend auf der zumindest einen Eigenschaft des aktuell von dem Fahrzeug (100) befahrenen Straßenverlaufs, wobei im Schritt des Einstellens (220) die Entprellzeit und/oder Entprellstrecke in Abhängigkeit von dem zumindest einen Verkehrszeichenerkennungssignal und anhand des dem zumindest einen Verkehrszeichenerkennungssignal zugewiesenen Einstellwertes einstellbar ist.

5. Verfahren (200) gemäß einem der vorangegangenen Ansprüche, **dadurch gekennzeichnet, dass** im Schritt des Empfangens (210) zumindest ein weiteres Verkehrszeichenerkennungssignal von einer Schnittstelle zu der Verkehrszeichenerkennungseinrichtung (110) empfangen wird, wobei das zumindest eine weitere Verkehrszeichenerkennungssignal zumindest ein weiteres in einem aktuell von dem Fahrzeug (100) befahrenen Straßenverlauf erkanntes Verkehrszeichen repräsentiert, und dass im Schritt des Einstellens (220) die Entprellzeit und/oder Entprellstrecke in Abhängigkeit von dem Verkehrszeichenerkennungssignal und dem zumindest einen weiteren Verkehrszeichenerkennungssignal eingestellt wird.

6. Verfahren (200) gemäß Anspruch 5, **gekennzeichnet durch** einen Schritt des Kombinierens des Verkehrszeichenerkennungssignals und des zumindest einen weiteren Verkehrszeichenerkennungssignals, um ein kombiniertes Verkehrszeichenerkennungssignal zu erzeugen, wobei im Schritt des Einstellens (220) die Entprellzeit und/oder Entprellstrecke in Abhängigkeit von dem kombinierten Verkehrszeichenerkennungssignal eingestellt wird.

7. Verfahren (200) gemäß einem der vorangegangenen Ansprüche, **dadurch gekennzeichnet, dass** im Schritt des Einstellens (220) die Entprellzeit und/oder Entprellstrecke in Abhängigkeit von dem Verkehrszeichenerkennungssignal und in Abhängigkeit von Fahrdaten des Fahrzeugs (100) und/oder einer Umgebungsinformation eingestellt wird.

8. Verfahren (200) gemäß einem der vorangegangenen Ansprüche, **gekennzeichnet durch** einen Schritt des Prüfens der eingestellten Entprellzeit und/oder Entprellstrecke auf Plausibilität anhand von Fahrdaten des Fahrzeugs (100) und/oder einer Umgebungsinformation und einen Schritt des Korrigierens der eingestellten Entprellzeit und/oder Entprellstrecke basierend auf den Fahrdaten des Fahrzeugs (100) und/oder der Umgebungsinformation, wenn sich im Schritt des Prüfens eine mangelnde Plausibilität der eingestellten Entprellzeit und/oder Entprellstrecke ergibt.

9. Vorrichtung (120), die ausgebildet ist, um die Schritte des Verfahrens (200) gemäß einem der Ansprüche 1 bis 8 durchzuführen.

10. Computerprogrammprodukt mit Programmcode, der auf einem maschinenlesbaren Träger gespeichert ist, zur Durchführung des Verfahrens (200) nach einem der Ansprüche 1 bis 8, wenn das Programm auf einer Vorrichtung (120) ausgeführt wird.
